# EUROPÄISCHE PATENTSCHRIFT

(11) **EP 1 661 734 B1**
(45) Veröffentlichungstag und Bekanntmachung des Hinweises auf die Patenterteilung: **15.12.2010**
(21) Anmeldenummer: 05110250.7
(22) Anmeldetag: 02.11.2005
(51) Int. Cl.: B60C 11/16

(54) **Spike sowie Fahrzeugreifen mit in der Lauffläche befestigten Spikes**
Stud and tire with a tread equipped with such studs
Clou et pneumatique avec la bande de roulement équipée avec des clous

(30) Priorität: 24.11.2004 DE 102004056823
(43) Veröffentlichungstag der Anmeldung: 31.05.2006
(73) Patentinhaber: Continental Reifen Deutschland GmbH, 30165 Hannover (DE)
(72) Erfinder: Schlittenhard, Jan, 30900, Wedemark (DE)
(74) Vertreter: Finger, Karsten

(56) Entgegenhaltungen:
- AT-B- 311 821
- FR-A- 2 775 934
- GB-A- 1 209 293
- US-A- 3 757 841
- US-A1- 2004 079 461
- PATENT ABSTRACTS OF JAPAN Bd. 007, Nr. 126 (M-219), 31. Mai 1983 (1983-05-31) & JP 58 043805 A (TOSHIO TAKAYAMA), 14. März 1983 (1983-03-14)
- PATENT ABSTRACTS OF JAPAN Bd. 007, Nr. 126 (M-219), 31. Mai 1983 (1983-05-31) & JP 58 043806 A (TOSHIO TAKAYAMA), 14. März 1983 (1983-03-14)

## Beschreibung

Die Erfindung betrifft einen Spikestift, der zur Bildung eines Spikes in einen Spikekörper einbringbar ist, bestehend aus einem Oberteil und einem Unterteil, wobei das Oberteil nach dem Einbringen des Spikestiftes in den Spikekörper die Spitze des Spikes bildet, sowie einen Spike für Fahrzeugreifen, Schuhsohlen oder dergleichen, mit einer Spikespitze, die bei Benutzung des Spikes mit dem Untergrund in Kontakt kommt, und einen Fahrzeugreifen - insbesondere eines Fahrzeugluftreifen - mit in der Lauffläche befestigten Spikes, die jeweils einen in einem Spikekörper befestigten Spikestift aufweisen, wobei der Spikestift aus einem Oberteil und aus einem Unterteil besteht, wobei das Oberteil die im Fahrzeugluftreifen radial nach außen gerichtetete Spitze des Spikes bildet.

Spikes für die Lauffläche eines Fahrzeugreifens, insbesondere eines Winterreifens, aber auch für Schuhsohlen und dergleichen sind in verschiedensten Ausführungen bekannt.

Derartige Spikes bestehen üblicherweise aus einem Spikekörper, der in die Lauffläche des Fahrzeugreifens, der Schuhsohle und dergleichen einbringbar ist, und einem Spikestift, der zur Bildung des Spikes in den Spikekörper eingebracht ist. Der Spikestift besteht aus einem Oberteil und einem Unterteil, wobei das Oberteil nach dem Einbringen des Spikestiftes in den Spikekörper aus dem Spikekörper herausragt. Bei Benutzung der mit den Spikes ausgerüsteten Materialien kommt das Oberteil mit dem Untergrund in Kontakt und sorgt für eine verbesserte Untergrundhaftung der Materialien, insbesondere bei Eis und Schnee. Hierzu ist das Oberteil üblicherweise abgeflacht und weist eine umlaufende Kante auf, die in den Untergrund greift. Bekannte Spikes sind beispielsweise in der EP 1 199 193 A1 beschrieben.

Derartige Spikes und Spikestifte haben jedoch nur eine relativ kurze Lebensdauer, da die umlaufende Kante des Oberteils relativ schnell abgetragen wird und damit einhergehend der Untergrundgriff herabgesetzt wird. Dadurch verringert sich insgesamt die Untergrundhaftung der mit den Spikes ausgerüsteten Materialien. Darüber hinaus belasten die Kanten von Eis und Schnee freie Straßenoberflächen, so dass diese frühzeitig ausgebessert werden müssen.

Aus der GB 120 92 93 ist ein Spikestift bekannt, der mit einer herstellungsbedingten über die gesamte Querschnittsfläche des Oberteils erstreckten Kuppel ausgebildet ist. Auch aus der JP 58 043 805 A ist ein Spikestift mit leicht konischem Schaft zu entnehmen, an dessen Stirnfläche eine Kuppel ausgebildet ist, die sich über die gesamte Stirnfläche erstreckt. Aus der gattungsbildenden JP 58 043 806 A ist ein Spikestift zu entnehmen, bei dem der Spikestift an seiner Stirnfläche mit einer Kuppel ausgebildet ist, die von einem kragenförmigen Rand umgeben ist.

Der Erfindung liegt die Aufgabe zugrunde, die durch die Benutzung von Spikes bedingten Abnutzungseffekte zu reduzieren.

Diese Aufgabe wird erfindungsgemäß durch die Ausbildung eines Spikestifts, der zur Bildung eines Spikes in einen Spikekörper einbringbar ist, bestehend aus einem Oberteil und einem Unterteil, wobei das Oberteil nach dem Einbringen des Spikestiftes in den Spikekörper die Spitze des Spikes bildet, gemäß denMerkmalen von Anspruch 1 gelöst, bei dem eine Griffkante den Spikestift in einer Teilungsebene in Oberteil und Unterteil teilt, wobei das Oberteil eine eine Abrollfläche bildende Schutzkuppel aufweist, die sich in der von der Teilungsebene wegweisenden Richtung erhebt. Die Aufgabe wird auch erfindungsgemäß durch die Ausbildung eines Spikes mit einem derartig ausgebildeten Spikestift gelöst.

Unabhängig davon wird erfindungsgemäß die Aufgabe auch durch die Ausbildung eines Fahrzeugreifens - insbesondere eines Fahrzeugluftreifens - mit in der Lauffläche befestigten Spikes, die jeweils einen in einem Spikekörper befestigten Spikestift aufweisen, wobei der Spikestift aus einem Oberteil und aus einem Unterteil besteht, wobei das Oberteil die im Fahrzeugluftreifen radial nach außen gerichtetete Spitze des Spikes bildet gemäß den Merkmalen von Anspruch 10 gelöst, bei dem eine Eisgriffkante den Spikestift in einer Teilungsebene in Oberteil und Unterteil teilt, dass das Oberteil eine eine Abrollfläche bildende Schutzkuppel aufweist, die sich in der von der Teilungsebene wegweisenden Richtung erhebt.

Beim Abrollen des Fahrzeugreifens kommt hierbei die Schutzkappe in Wirkkontakt zur Straßenoberfläche. Auf Eis- oder Schneebedeckter Straßenoberfläche wird die Schutzkappe dabei ins Eis bzw. in den Schnee gepresst. Die Griffkante eines jeden Spikes trifft dabei in Wirkverbindung mit dem Eis- bzw. den Schnee. Sie wirkt hierdurch während des Abrollens unmittelbar auf die Eis- bzw. die Schneeoberfläche ein und ermöglicht somit direkt einen sicheren Griff auf eis- oder schneebedeckter Straße. Der Reifen rollt über die Schutzkappe weiter ab, so dass die Griffkante vor Abnutzung entlastet wird. Griffkante und Straßenoberfläche werden hierdurch weniger stark abgenutzt.

Weiterbildungen und vorteilhafte Ausgestaltungen der Erfindung ergeben sich aus den Unteransprüchen.

Besonders vorteilhaft ist die Ausbildung eines Spikestifts gemäß den Merkmalen von Anspruch 2. Der Spikestift, der zur Bildung eines Spikes in einen Spikekörper einbringbar ist, besteht aus einem Oberteil und einem Unterteil, wobei das Oberteil nach dem Einbringen des Spikestiftes in den Spikekörper aus dem Spikekörper herausragt und während der Benutzung des Spikes mit dem Untergrund in Kontakt kommt. Eine Rondiste teilt den Spikestift in Oberteil und Unterteil. Das Oberteil umfasst eine tafelförmige Fläche, die im Abstand über der Rondistenebene angeordnet ist. Zwischen tafelförmiger Fläche und der Rondiste ist wenigstens eine Facette ausgebildet.

Die Begriffe Rondiste, Tafel und Facette werden üblicherweise auf dem Gebiet der geschliffenen Edelsteine verwendet. Sie sind jedoch geeignet, die erfindungsgemäßen Gegenstände zu beschreiben, da die Form der erfindungsgemäßen Gegenstände geschliffenen Edelsteinen ähnlich ist.

Hier und im folgenden wird daher unter einer Rondiste der größte horizontale Umfang des Spikestiftes verstanden, welcher gleichzeitig den Spikestift in ein Oberteil und ein Unterteil aufteilt. Die von der Rondiste eingeschlossene Fläche bildet dann die Rondistenebene. Jede Querschnittsfläche des Oberteils und jede Querschnittsfläche des Unterteils ist somit kleiner als die Fläche der Rondistenebene. Hier und im folgenden wird unter einer tafelförmigen Fläche die größte durch Kanten begrenzte Fläche auf dem Oberteil verstanden. Unter einer Facette wird hier und im folgenden eine kleine, zur Rondistenebene schräg verlaufende Fläche verstanden.

Durch diese Ausgestaltung des Spikestiftes wird eine längere Lebensdauer und Haltbarkeit des Spikestiftes und damit einhergehend des Spikes insgesamt erreicht. Dies ist darauf zurückzuführen, dass die Anzahl der Kanten, die in den Untergrund greifen, durch die erfindungsgemäße Ausgestaltung erhöht wird. Es stehen also mehr Kanten zur Verfügung, auf die sich die übliche Abnutzung verteilt. Die Summe der Längen der einzelnen Kanten lässt sich gegenüber dem Stand der Technik wesentlich steigern.

Eine Weiterbildung der Erfindung sieht vor, dass die tafelförmige Fläche zentral über der Rondistenebene angeordnet ist. Dadurch wird eine gleichmäßige und verbesserte Abnutzung des Spikestiftes gewährleistet, wenn dieser bei Benutzung in alle Fahrt- oder Laufrichtungen beansprucht wird.

In einer vorteilhaften Ausgestaltung der Erfindung ist die tafelförmige Fläche planparallel und die Kante parallel zur Rondistenebene angeordnet. Dadurch wird eine gleichmäßige und verbesserte Abnutzung des Spikestiftes gewährleistet, wenn dieser bei Benutzung in alle Fahrt- oder Laufrichtungen beansprucht wird.

Die tafelförmige Fläche kann kreisförmig, elliptisch, dreieckig, quadratisch, rechteckig, sechseckig, vieleckig oder sternförmig sein. Je nach Anwendungsgebiet sind dadurch zahlreiche Möglichkeiten gegeben, den Spike hinsichtlich einer verbesserten Untergrundhaftung mit gleichzeitig verbesserter Haltbarkeit auszugestalten.

Die Rondistenebene kann entsprechend kreisförmig, elliptisch, dreieckig, quadratisch, rechteckig, sechseckig, vieleckig oder sternförmig sein. Je nach Anwendungsgebiet sind dadurch ebenfalls zahlreiche Möglichkeiten gegeben, den Spike hinsichtlich einer verbesserten Untergrundhaftung mit gleichzeitig verbesserter Haltbarkeit auszugestalten.

Weiterhin ist vorgesehen, dass das Unterteil des Spikestiftes ausgehend von der Rondistenebene nach unten spitz zuläuft. Dadurch wird eine gute Haltbarkeit des Spikestiftes im Spikekörper erreicht. Vorzugsweise ist das Unterteil des Spikestifte nach Art eines Kegels, eines Kegelstumpfes, einer Pyramide oder eines Pyramidenstumpfes ausgebildet ist, wobei das sich im Querschnitt verengende Ende des Unterteils von der Rondistenebene weg weist.

Die Facetten können kreisförmig, elliptisch, dreieckig, quadratisch, rechteckig, sechseckig oder vieleckig sein. Je nach Anwendungsgebiet sind dadurch zahlreiche Möglichkeiten gegeben, den Spike hinsichtlich einer verbesserten Untergrundhaftung mit gleichzeitig verbesserter Haltbarkeit auszugestalten.

Bevorzugt ist die Ausbildung eines Fahrzeugreifens gemäß den Merkamlen von Anspruch 12 mit jeweils einer um die Reifenachse zylindrischen Hüllkurve mit einem Radius R₁, die einen Spike jeweils lediglich an dessen Schutzkuppel berührt. Hierdurch kann in einfacher Weise eine Entlastung der Griffkanten unter schonendem Abrollen über die schützende Schutzkuppel ermöglicht werden.

Besonders vorteilhaft ist die Ausbildung eines Fahrzeugreifens gemäß den Merkmalen von Anspruch 13, bei der jeweils die in den Punkten P der Griffkante senkrecht zum radialen Abstand zur Reifenachse stehende Tangentenebene die Schutzkuppel schneidet. Durch diese Ausbildung kann in einfacher Weise sichergestellt werden, dass die Abrollbewegung vollständig über die Schutzkuppel erfolgt, wodurch eine besonders schonende Abrollbewegung beim Abrollen auf einer Straßenoberfläche bei sichergestelltem Griff auf Eis- und Schnee ermöglicht wird.

Bei herkömmlichen Spikestiften sind teilweise durch Pressverfahren fertigungsbedingte geringfügige Unebenheiten der Stiftenden zu erkennen. Diese sind jedoch keine Schutzkappen. Die Unebenheiten sind so gering, dass der Abrollvorgang in vollem Umfang über die Griffkanten erfolgt und somit.den Verschleiß von Spikestift und Straßenoberfläche nicht mindern.

Nachfolgend wird die Erfindung anhand von in den Figuren 1 bis 15 schematisch dargestellten Ausführungsbeispielen erläutert. Hierin zeigen:
- Fig. 1: einen erfindungsgemäßen Spikestift in a) Draufsicht auf das Oberteil und in b) und c) jeweils einer Seitenansicht,
- Fig. 2: einen erfindungsgemäßen Spikestift in a) Draufsicht auf das Oberteil und in b) und c) jeweils einer Seitenansicht,
- Fig. 3: einen erfindungsgemäßen Spikestift in a) Draufsicht auf das Oberteil und in b) einer Seitenansicht,
- Fig. 4: einen erfindungsgemäßen Spikestift in a) Draufsicht auf das Oberteil und in b) und c) jeweils einer Seitenansicht,
- Fig. 5: einen erfindungsgemäßen Spikestift in a) Draufsicht auf das Oberteil und in b) und c) jeweils einer Seitenansicht,
- Fig. 6: einen erfindungsgemäßen Spikestift in a) Draufsicht auf das Oberteil und in b) einer Seitenansicht,
- Fig. 7: einen erfindungsgemäßen Spikestift in a) Draufsicht auf das Oberteil und in b) und c) jeweils einer Seitenansicht,
- Fig. 8: einen erfindungsgemäßen Spikestift in a) Draufsicht auf das Oberteil und in b) einer Seitenansicht,
- Fig. 9: einen erfindungsgemäßen Spikestift in a) Draufsicht auf das Oberteil und in b) und c) jeweils einer Seitenansicht,
- Fig. 10: einen erfindungsgemäßen Spikestift in a) Draufsicht auf das Oberteil, in b) Seitenansicht und in c) Draufsicht auf das Unterteil,
- Fig. 11 bis 12: jeweils einen erfindungsgemäßen Spikestift in Draufsicht auf das Oberteil,
- Fig. 13: einen erfindungsgemäßen Spikestift in a) Draufsicht auf das Oberteil und in b) und c) jeweils einer Seitenansicht,
- Fig. 14: b) bis i) verschiedene Ausführungen der Formkontur in der der kuppelförmigen Erhebungen im Schnitt XIV-XIV von Fig. 14a),
- Fig. 15: a) bis c) Dastellung eine smit Spike und Spikestift bestückten Fahrzuegluftreifens im Betreibszustand unter Last zur Erläuterung des Abrollverhaltens des Spikestifts.

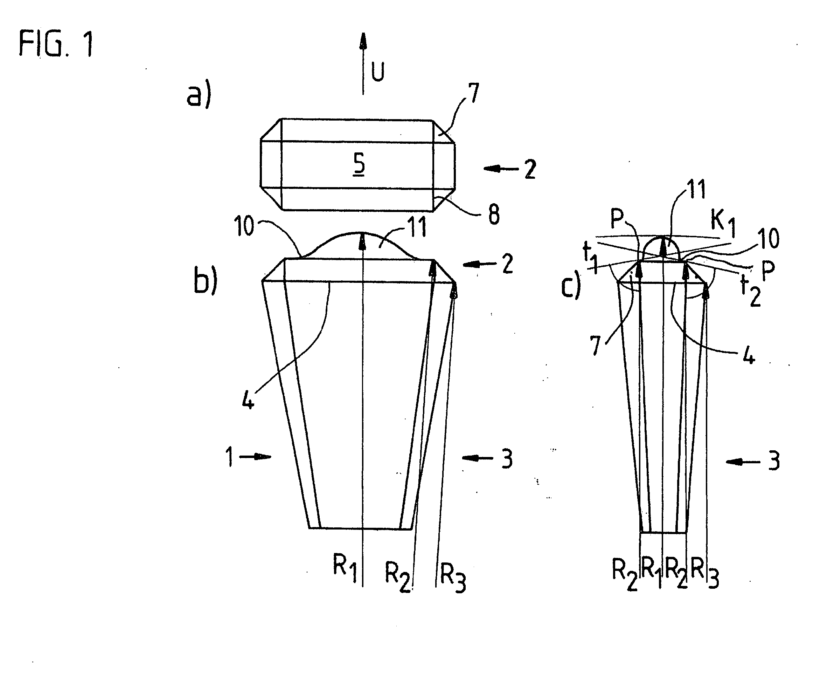

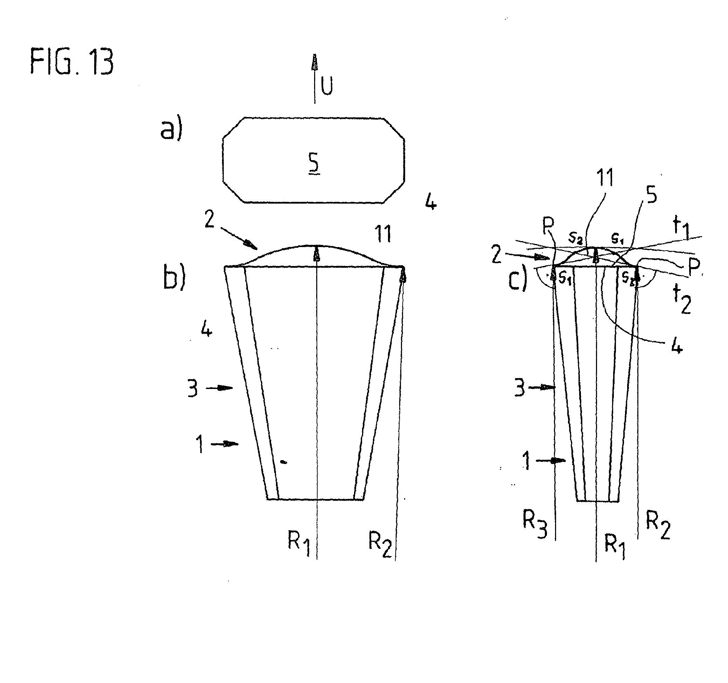

In den Fig. 1 bis 10 und 13 ist jeweils ein erfindungsgemäßer Spikestift 1 in a) Draufsicht auf das Oberteil 2 und in b) bzw. c) jeweils einer Seitenansicht dargestellt. Jeder Spikestift 1 umfasst eine Rondiste 4, die den Spikestift 1 in Oberteil 2 und Unterteil 3 teilt. Die Rondiste 4 ist hierbei der größte horizontale Umfang des Spikestiftes 1.
das in den Fig. 1 bis 10 dargestellte Oberteil 2 umfasst eine an ihrer im montierten Zustand am Fahrzeugluftreifen radial äußeren Stirnseite tafelförmige Fläche 5. Diese ist - wie beispielsweise in Fig. 13 dargestellt ist - zentral in der Rondistenebene angeordnet. Es ist deutlich zu erkennen, dass die Rondiste 4 Griffkanten zur Untergrundhaftungaufweisen.

In einer anderen Ausführung ist die tafelförmige Fläche 5- wie beispielsweise in den Fig. 1 bis 10 dargestellt ist -, im Abstand, zentral und planparallel über der Rondistenebene angeordnet. In dieser Ausbildung sind zwischen dargestellter tafelförmiger Fläche 5 und der Rondiste 4 jeweils Facetten 7, nämlich begrenzte, schräg zur Rondistenebene verlaufende Flächen, angeordnet.Es ist deutlich zu erkennen, dass die Stifte zu den durch die Rondiste 4 gebildten Griffkanten jeweils zusätzliche Kanten aufweisen, die zu einer verbesserten Untergrundhaftung und einer längeren Lebensdauer der Spikes führen.

Der in Fig. 1 dargestellte Spikestift 1 besitzt eine rechteckige von einer Umrandungskante 10 begrenzte tafelförmige Fläche 5 und eine achteckige Rondistenebene. Unterhalb dieser achteckigen Rondistenebene schließt das Unterteil 3 an, das nach Art eines Pyramidenstumpfes mit achteckiger Grundfläche ausgebildet ist, wobei das sich im Querschnitt verengende Ende des Unterteils 3 von der Rondistenebene weg weist. Das Oberteil 2 umfasst insgesamt acht Facetten 7, wobei vier Facetten 7 dreieckförmig und vier Facetten 7 rechteckförmig ausgebildet sind. Die Facetten 7 sind zwischen Rondiste 4 und der tafelförmigen Fläche 5 angeordnet und durch weitere Kanten 8 von einander abgegrenzt. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

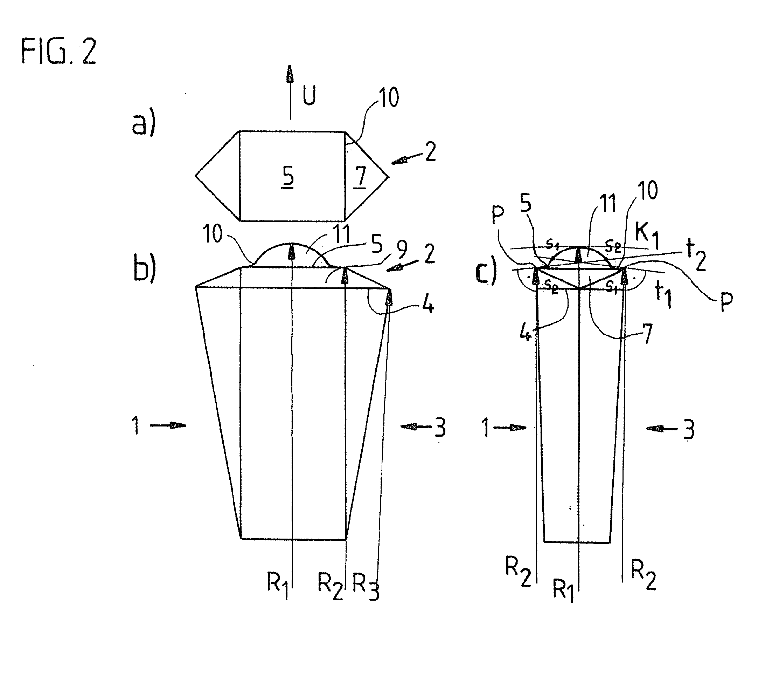

Der in Fig. 2 dargestellte Spikestift 1 besitzt eine von einer Umrandungskante 10 begrenzte rechteckige tafelförmige Fläche 5 und eine sechseckige Rondistenebene. Unterhalb dieser achteckigen Rondistenebene schließt das Unterteil 3 an, das nach Art eines Pyramidenstumpfes mit sechseckiger Grundfläche ausgebildet ist, wobei das sich im Querschnitt verengende Ende des Unterteils 3 von der Rondistenebene weg weist. Das Oberteil 2 umfasst insgesamt zwei dreieckförmige Facetten 7, die an zwei sich gegenüberliegenden Seiten der rechteckigen tafelförmigen Fläche 5 angeordnet sind. Die Facetten 7 verlaufen schräg zur Rondistenebene und sind zwischen Rondiste 4 und der tafelförmige Fläche 5 angeordnet. Die nicht mit Facetten 7 versehenen Seiten der tafelförmigen Fläche 5 stehen senkrecht über den entsprechenden Abschnitten der Rondiste 4. Die zwischen diesen Seiten und den entsprechenden Abschnitten der Rondiste 4 angeordneten Flächen 9 bilden also einen rechten Winkel mit der Rondistenebene. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

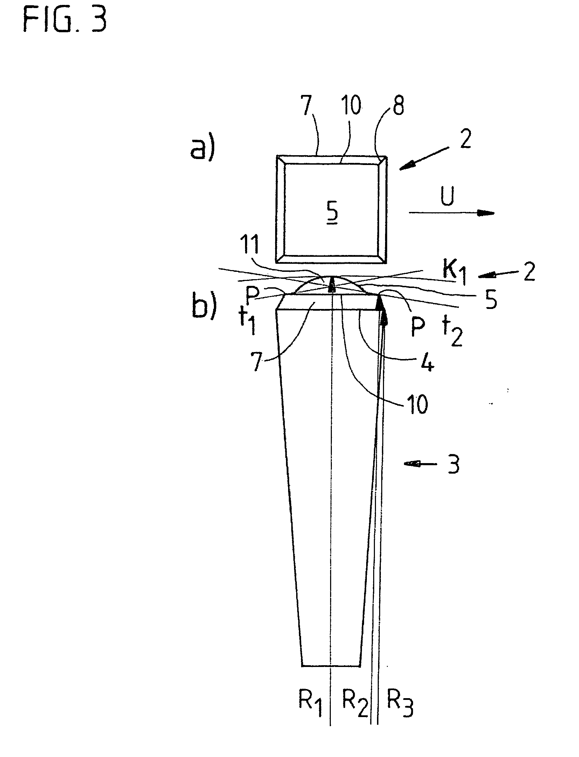

Der in Fig. 3 dargestellte Spikestift 1 besitzt eine von einer Umrandungskante 10 begrenzte quadratische tafelförmige Fläche 5 und eine quadratische Rondistenebene. Unterhalb dieser quadratischen Rondistenebene schließt das Unterteil 3 an, das nach Art eines Pyramidenstumpfes mit quadratischer Grundfläche ausgebildet ist, wobei das sich im Querschnitt verengende Ende des Unterteils 3 von der Rondistenebene weg weist. Das Oberteil 2 umfasst insgesamt vier Facetten 7, die zwischen Rondiste 4 und der tafelförmige Fläche 5 angeordnet und durch weitere Kanten 8 von einander abgegrenzt sind. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

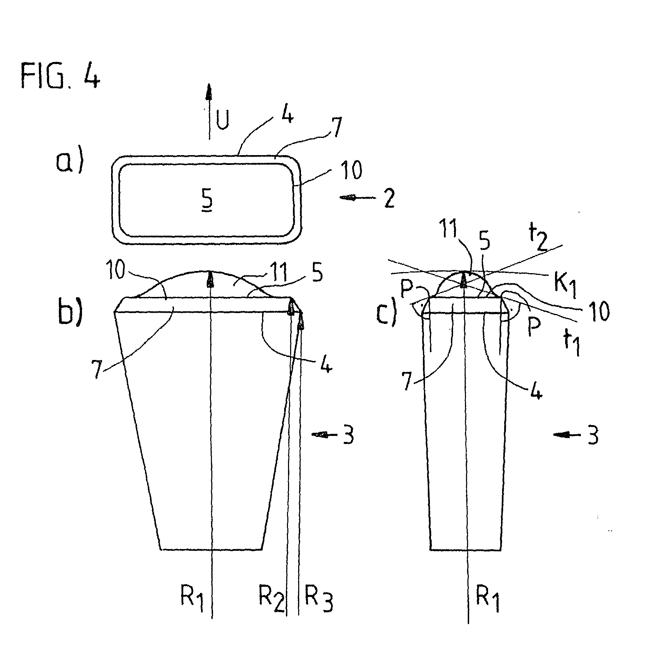

Der in Fig. 4 dargestellte Spikestift 1 besitzt eine von einer Umrandungskante 10 begrenzte rechteckige tafelförmige Fläche 5 mit abgerundeten Ecken und eine rechteckige Rondistenebene mit abgerundeten Ecken. Unterhalb dieser Rondistenebene schließt sich das Unterteil 3 an, das im Querschnitt nach unten verengt ist. Das Oberteil 2 umfasst nur eine umlaufende Facetten 7, die zwischen Rondiste 4 und der tafelförmigen Fläche 5 angeordnet ist und einen umlaufenden Rand bildet. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

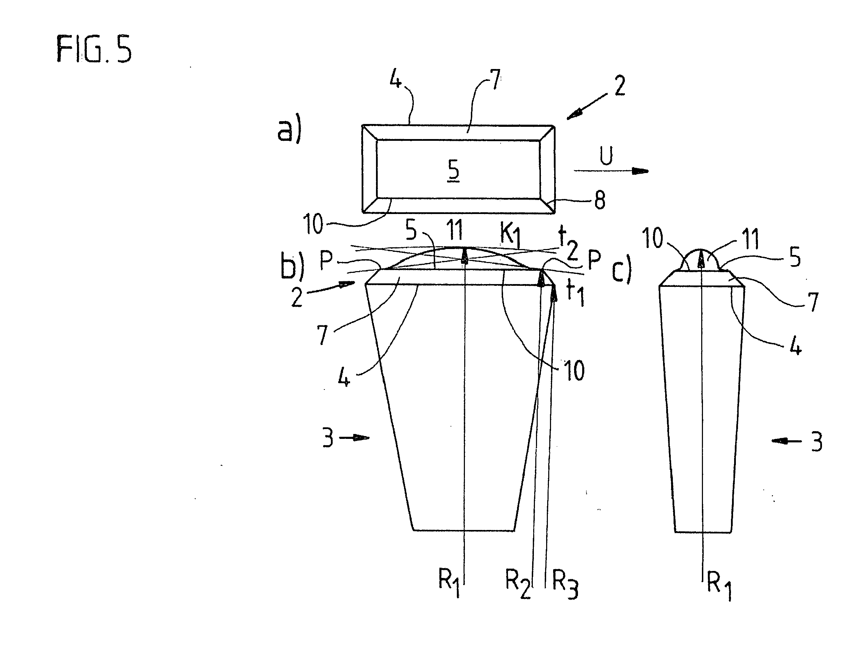

Der in Fig. 5 dargestellte Spikestift 1 besitzt eine von einer Umrandungskante 10 begrenzte rechteckige tafelförmige Fläche 5 und eine rechteckige Rondistenebene. Unterhalb dieser Rondistenebene schließt das Unterteil 3 an, das im Querschnitt nach unten verengt ist. Das Oberteil 2 umfasst insgesamt vier Facetten 7, die zwischen Rondiste 4 und der tafelförmigen Fläche 5 angeordnet und durch weitere Kanten 8 von einander abgegrenzt sind. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

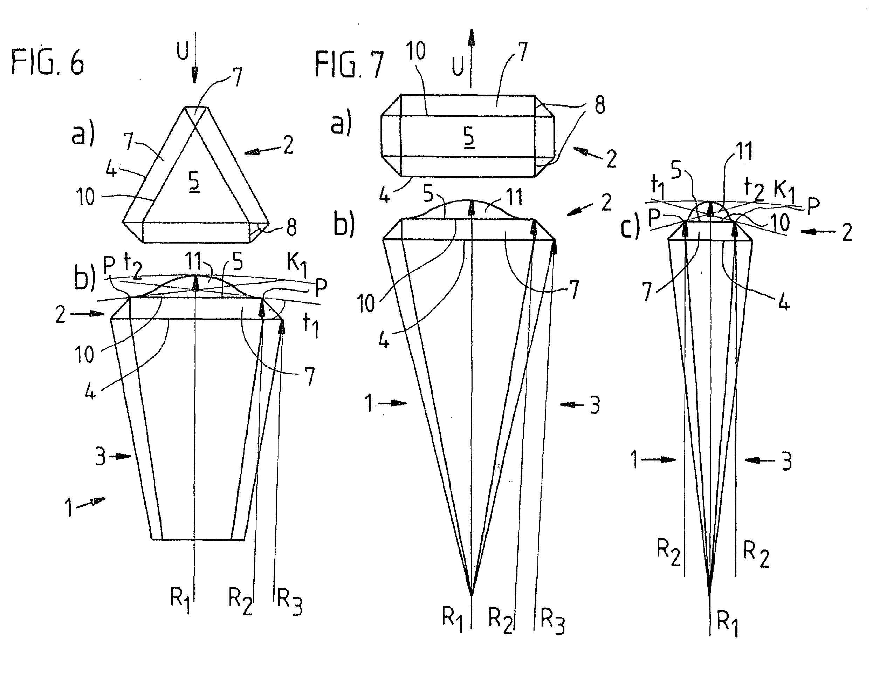

Der in Fig. 6 dargestellte Spikestift 1 besitzt eine von einer Umrandungskante 10 begrenzte dreieckige tafelförmige Fläche 5 und eine sechseckige Rondistenebene. Unterhalb dieser sechseckigen Rondistenebene schließt das Unterteil 3 an, das sich im Querschnitt nach unten hin verengt. Das Oberteil 2 umfasst insgesamt sechs Facetten 7, die zwischen Rondiste 4 und der tafelförmige Fläche 5 angeordnet und durch weitere Kanten 8 von einander abgegrenzt sind. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

Der in Fig. 7 dargestellte Spikestift 1 besitzt eine von einer Umrandungskante 10 begrenzte rechteckige tafelförmige Fläche 5 und eine achteckige Rondistenebene. Unterhalb dieser achteckigen Rondistenebene schließt das Unterteil 3 an, das sich im Querschnitt nach unten hin verengt und spitz zuläuft. Das Oberteil 2 umfasst insgesamt acht Facetten 7, nämlich vier rechteckige und vier dreieckige Facetten 7, welche zwischen Rondiste 4 und der tafelförmige Fläche 5 angeordnet und durch weitere Kanten 8 von einander abgegrenzt sind. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

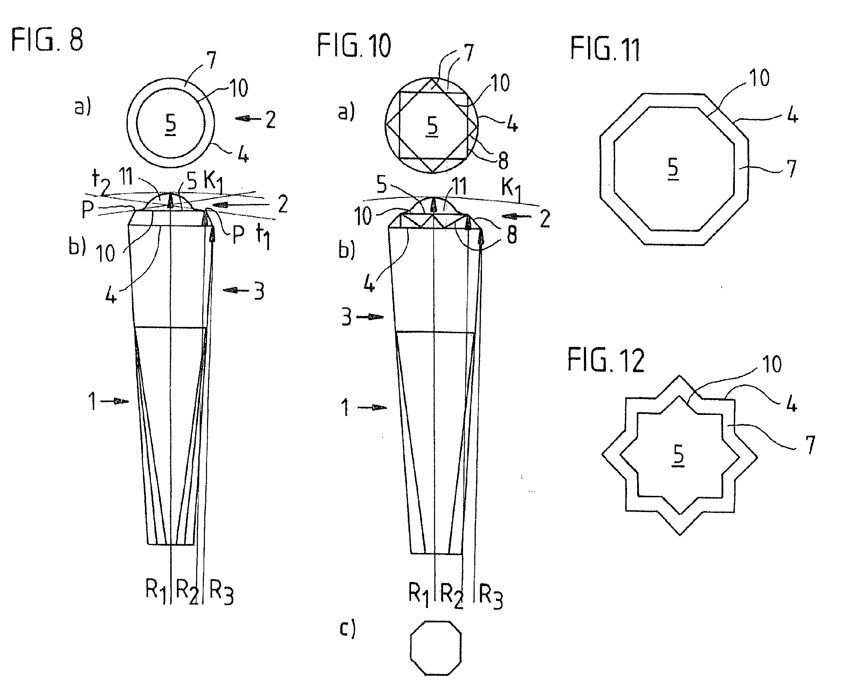

Der in Fig. 8 dargestellte Spikestift 1 besitzt eine von einer Umrandungskante 10 begrenzte kreisförmige tafelförmige Fläche 5 und eine kreisförmige Rondistenebene. Unterhalb dieser kreisförmigen Rondistenebene schließt das Unterteil 3 nach Art eines Kegelstumpfes an, der sich im Querschnitt nach unten hin verengt. Das Oberteil 2 umfasst nur eine umlaufende Facette 7, die zwischen Rondiste 4 und der tafelförmigen Fläche 5 angeordnet ist und einen umlaufenden Rand bildet. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

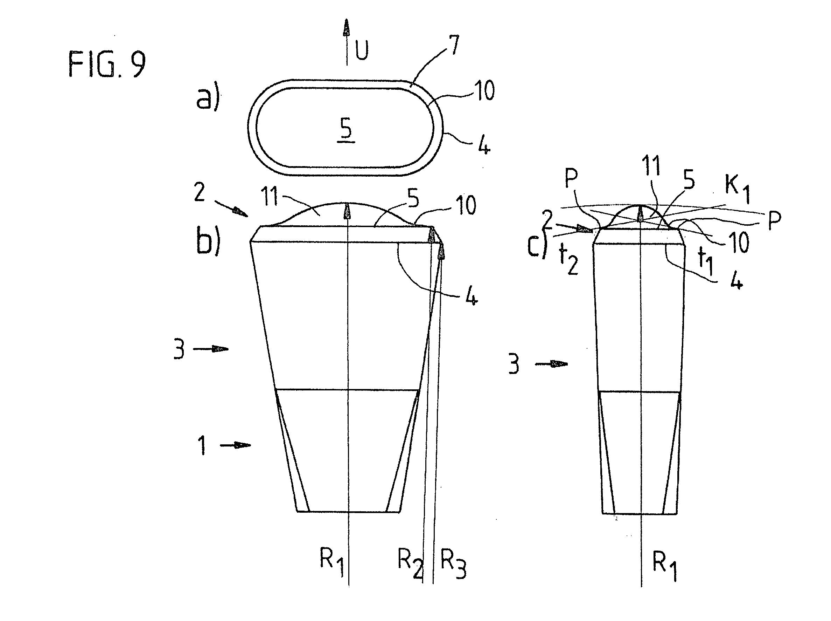

Der in Fig. 9 dargestellte Spikestift 1 besitzt eine von einer Umrandungskante 10 begrenzte ovalförmige tafelförmige Fläche 5 und eine ovalförmige Rondistenebene. Unterhalb dieser ovalförmigen Rondistenebene schließt das Unterteil 3 nach Art eines Kegelstumpfes an, der sich im Querschnitt nach unten hin verengt. Das Oberteil 2 umfasst nur eine umlaufende Facette 7, die zwischen Rondiste 4 und der tafelförmigen Fläche 5 angeordnet ist und einen umlaufenden Rand bildet. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

In Fig. 10 ist ein erfindungsgemäßer Spikestift in a) Draufsicht auf das Oberteil, in b) Seitenansicht und in c) Draufsicht auf das Unterteil dargestellt. Der Spikestift 1 umfasst eine von einer Umrandungskante 10 begrenzte Rondiste 4, die den Spikestift 1 in Oberteil 2 und Unterteil 3 teilt. Das Oberteil 2 umfasst eine tafelförmige Fläche 5, die im Abstand, zentral und planparallel über der Rondistenebene angeordnet ist. Zwischen der tafelförmigen Fläche 5 und der Rondiste 4 sind Facetten 7, nämlich begrenzte, schräg zur Rondistenebene verlaufende Flächen, angeordnet. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

Der Spikestift 1 besitzt eine achteckige tafelförmige Fläche 5 und eine kreisförmige Rondistenebene. Unterhalb dieser kreisförmigen Rondistenebene schließt das Unterteil 3 nach Art eines Kegelstumpfes an, der sich im Querschnitt nach unten hin verengt, wobei die Rondistenebene quasi die Grundfläche des Kegelstumpfes bildet. Der zunächst kreisförmige Querschnitt geht nach unten hin in einen achteckigen Querschnitt über, der in c) dargestellt ist. Das Oberteil 2 umfasst sechzehn Facetten 7, die zwischen Rondiste 4 und der tafelförmigen Fläche 5 angeordnet und durch weitere Kanten 8 voneinander abgegrenzt sind.

In den Fig. 11 bis 12 ist jeweils ein erfindungsgemäßer Spikestift in Draufsicht auf das Oberteil 2 dargestellt.

Der in Fig. 11 dargestellte Spikestift besitzt eine von einer Umrandungskante 10 begrenzte achteckige tafelförmige Fläche 5 und eine achteckige Rondiste 4 bzw. Rondistenebene. Das Oberteil 2 umfasst eine umlaufende Facette 7, die zwischen Rondiste 4 und der tafelförmigen Fläche 5 angeordnet ist und einen umlaufenden Rand bildet. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

Der in Fig. 12 dargestellte Spikestift besitzt eine von einer Umrandungskante 10 begrenzte sternförmige tafelförmige Fläche 5 und eine sternförmige Rondiste 4. Das Oberteil 2 umfasst eine umlaufende Facette 7, die zwischen Rondiste 4 und der tafelförmigen Fläche 5 angeordnet ist und einen umlaufenden Rand bildet. Aus der tafelförmigen Fläche 5 erhebt sich von der Rondistenebene wegweisend und im Fahrzeugluftreifen nach radial außen weisend eine Schutzkuppel in Form einer kuppelförmige Erhebung 11.

In Figur 13 ist beispielhaft für alle oben genannten Ausführungsformen am Beispiel des in Fig. 7 dargestellten Spikestifts ein Spikestifts 1 ohne Facetten dargestellt, bei der die Randiste 4 jeweils die tafelförmige Fläche 5 begrenzt.

Der in Fig. 13 dargestellte Spikestift 1 besitzt eine von einer Rondiste 4 begrenzte achteckige tafelförmige Fläche 5. Unterhalb dieser achteckigen Rondistenebene schließt das Unterteil 3 an, das sich im Querschnitt nach unten hin verengt und spitz zuläuft. Das Oberteil 2 umfasst eine sich aus aus der tafelförmigen Fläche 5 erhebende, von der Rondistenebene wegweisende und im Fahrzeugluftreifen nach radial außen weisende Schutzkuppel in Form einer kuppelförmigen Erhebung 11.

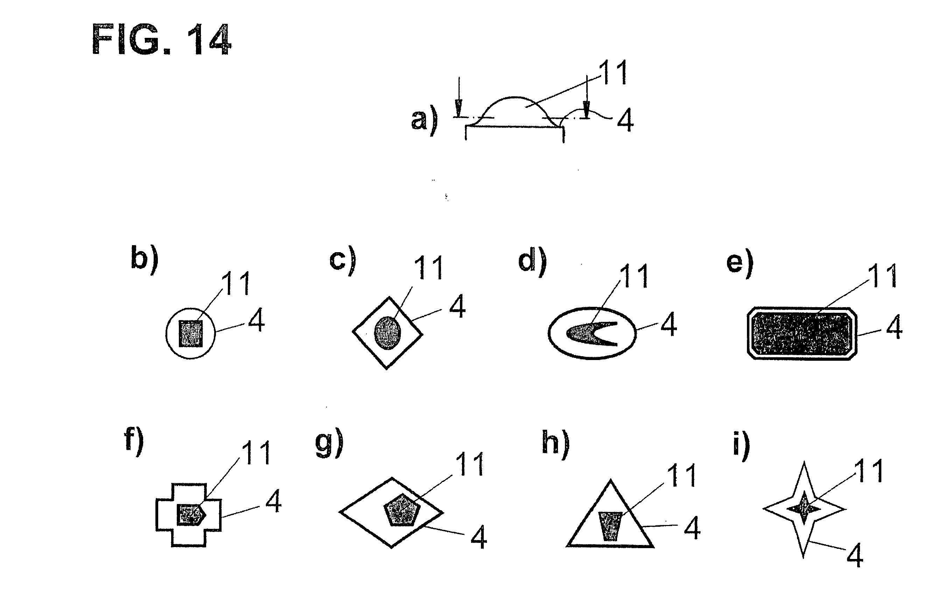

Die Schnittkontur der kuppelförmigen Erhebung 11 in einem Schnitt parallel zur Rondistenebene kann in unterschiedlichster Form ausgebildet sein. In den Fig.14a) bis Fig.14i) sind verschiedene alternative Formen der kuppelförmigen Erhebung 11 beispielhaft dargestellt.

Dabei zeigen die Fib.14b) bis Fig. 14i) jeweils unterschiedliche Formen in einer Schnittdarstellung gemäß desSchnittes XIV-XIV von Fig.14a). Die Schnittkontur der kuppelförmigen Erhebung 11 kann beispielsweise - wie in Fig. 14b) dargestellt ist - quadratisch oder - wie in Fig. 14c) dargestellt ist - oval oder- wie in Fig. 14d) dargestellt ist - sichelförmig oder- wie in Fig. 14e) dargestellt ist - achteckig oder- wie in Fig. 14f) und 14 g) dargestellt ist - fünfeckig oder- wie in Fig. 14h) dargestellt ist - trapezförmig oder- wie in Fig. 14i) dargestellt ist - sternenförmig ausgebildet sein. Die kuppelförmige Erhebung 11 kann dabei entweder - wie beispielsweise in Fig. 14b und Fig.14c dargestellt ist - konzentrisch zur von der Rondiste 4 umgebenen Fläche oder auch - wie beispielsweise in Fig. 14g dargestellt ist - exzentrisch zur von der Rondiste 4 umgebenen Fläche ausgebildet sein.. Dies kann beispielsweise bei Rennspikes besonders sinnvoll sein.
Im Betriebszustand am umbelasteten Fahrzeugluftreifen bei Betriebsdurck des Fahrzeugluftreifens gibt es für jeden Spikestift einen Hüllzylinder mit einem Radius R₁ konzentrisch zur Reifenachse, dessen Zylindermantelfläche K₁ den Spike lediglich an der kuppelförmigen Erhebung 11 des Spikestifts 1 berührt. Dies ist beispielsweise in den Figuren 1 bis 10 und in Fig. 13 dargestellt. Hierzu ist in die Figuren 1 bis 7 sowie in die Fig. 9 und 13 die bevorzugte Umfangsrichtung U des Fahrezeugreifens bei montiertem Spike eingetragen. In den Ausführungsbeispielen der Fig. 8 und Fig. 10 ist aufgrund der Symmetrie der Form des Spikestiftes keine bevorzugte Umfangsrichtung U explizit eingetragen.

Die jeweils zu jedem Punkt P der den Spikestift durch die jeweils aus Rondiste 4 bzw. - soweit vorhanden- aus Umrundungskante 10 gebildete radial äußere Griffkante schneidet die im Betriebszustand am umbelasteten Fahrzeugluftreifen bei Betriebsdurck des Fahrzeugluftreifens in dem Punkt P gebildete senkrechte Ebene auf den Radius zu diesem Punkt P im Fahrzeugluftreifen jeweils die kuppelförmigen Erhebung 11 des Spikestifts 1 unterhalb ihres Gipfels. Dies ist für den Fall einer als radial äußere Griffkante ausgebildeten Umrundungskante 11 beispielsweise in Fig 1c für die Punkte P der in Umfangsrichtung des Fahrzeugreifens vorderen und hinteren Griffkantenabschnitts der Umrundungskante 10 dargestellt. Auf die Radien R₂ bzw R₃ der Punkte P der Umrundungskante 10 ist jeweils eine senkrechte Ebene t₁ bzw. t₂ eingezeichnet, die jeweils die kuppelförmige Erhebung 11 unterhalb des Gipfels der Kuppel schneiden. Für den Fall einer als radial äußere Griffkante ausgebildeten Rondiste 4 ist dies beispielsweise in Fig. 13c für die Punkte der in Umfangsrichtung des Fahrzeugreifens vorderen und hinteren Griffkantenabschnitts der Rondiste 4 dargestellt. Auf die Radien R₂ bzw R₃ der Punkte P der Umrundungskante 10 ist jeweils eine senkrechte Ebene t₁ bzw. t₂ eingezeichnet, die jeweils die kuppelförmige Erhebung 11 unterhalb des Gipfels der Kuppel schneiden.

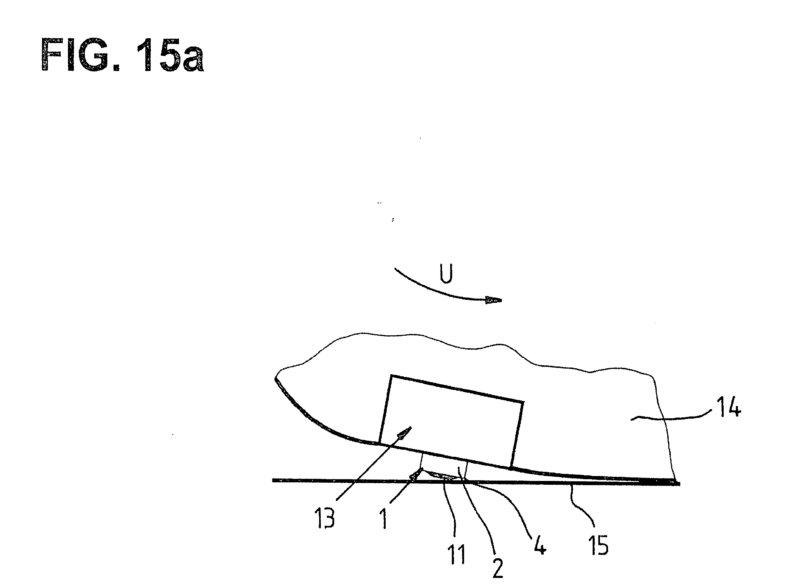

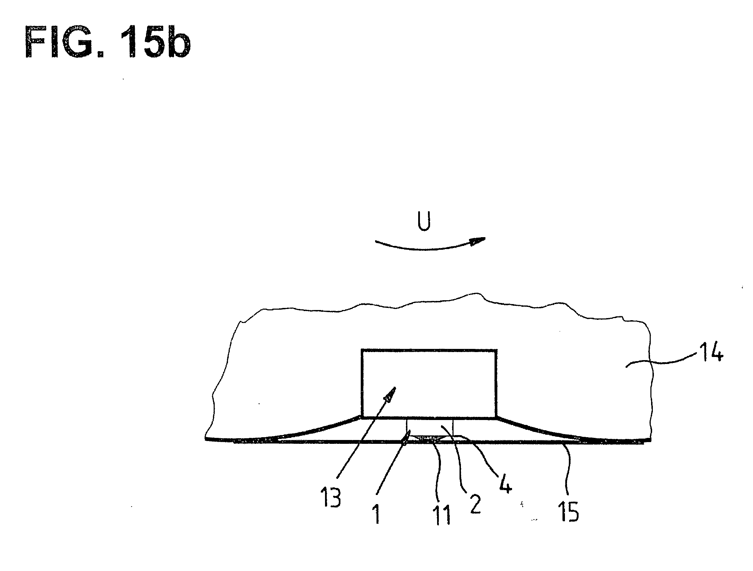

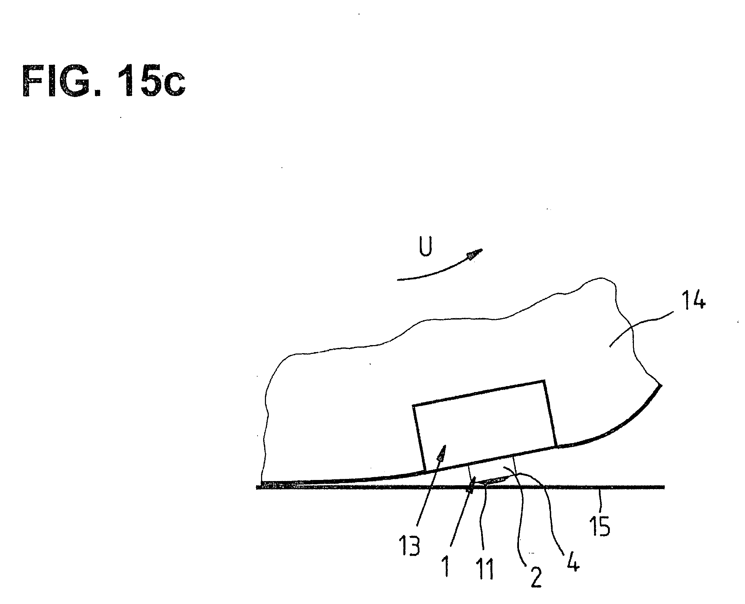

In Fig. 15a,b,c ist zur Erläuterung des Abrollprozesses eines unter Betriebsdurck und Last in Umfangsrichtung U abrollenden Fahrzeugluftreifens 14, der mit einem Spike 13 mit Spikestift 1 bestückt ist, an Hand eines Spikestifts 1 gemäß Fig. 13 dargestellt. Der Spike nähert sich der Straßenoberfläche 1 und setzt ohne Berührung der als Griffkante radial au-βen ausgebildeten Rondiste 4 mit seiner als Schutzkuppel ausgebildeten kuppelförmigen Erhebung 11 auf der Straßenoberfläche 1 auf. Dies ist in Fig. 15a dargestellt. Danach rollt der Fahrzeugluftreifen über die als Schutzkuppel ausgebildete kuppelförmige Erhebung 11 auf der Straßenoberfläche 1 ab, wie in Fig.15b dargestellt ist. In Fig. 15c ist dargestellt, dass der Spike ohne Berührung der als Griffkante radial außen ausgebildeten Rondiste 4mit der Straßenoberfläche 1 in die Ausrollphase übergeht bis auch der Berührkontakt der als Schutzkuppel ausgebildeten kuppelförmigen Erhebung 11 zur Straßenoberfläche 1 aufgehoben wird.

Soweit die Straßenoberfläche mit Eis bedeckt ist, wird der Spikestift 1 in der in Fig. 15b dargestellten Abrollphase in das Eis eingepresst und sorgt für zusätzlichen Griff.

### Bezugszeichenliste

### (ist Bestandteil der Beschreibung)

- 1: Spikestift
- 2: Oberteil
- 3: Unterteil
- 4: Rondiste
- 5: Tafelförmige Fläche
- 6: Kante
- 7: Facette
- 8: Kante
- 9: Fläche
- 10: Umrandungskante
- 11: Kuppelförmige Erhebung
- 12:
- 13: Spike
- 14: Fahrzeugreifen
- 15: Straßenoberfläche

## Patentansprüche

1. Spikestift (1), der zur Bildung eines Spikes in einen Spikekörper einbringbar ist, bestehend aus einem Oberteil (2) und einem Unterteil (3), wobei das Oberteil (2) nach dem Einbringen des Spikestiftes (1) in den Spikekörper die Spitze des Spikes bildet, dass eine Griffkante (4) den Spikestift (1) in einer Teilungsebene in Oberteil (2) und Unterteil (3) teilt, wobei das Oberteil (2) eine tafelförmige Fläche (5) umfasst, die eine Abrollfläche bildende Schutzkuppel (11) aufweist, die sich aus der tafelförmigen Fläche (5) in der von der tafelförmigen Fläche (5) wegweisenden Richtung erhebt,
**dadurch gekennzeichnet,**
**dass** das Unterteil (3) nach unten spitz zuläuft und, nach Art eines Kegels, eines Kegelstumpfes, einer Pyramide oder eines Pyramidenstumpfes ausgebildet ist, wobei das sich im Querschnitt verengende Ende des Unterteils (3) von der von der Griffkante (4) umschlossenen Ebene weg weist.

2. Spikestift (1) nach Anspruch 1, **dadurch gekennzeichnet, dass** eine die Griffkante bildende Rondiste (4) den Spikestift (1) in einer Teilungsebene in Oberteil (2) und Unterteil (3) teilt, dass das Oberteil (2) eine tafelförmige Fläche (5), umfasst, die im Abstand über der Rondistenebene angeordnet ist, und dass zwischen tafelförmige Fläche (5) und der Rondiste (4) wenigstens eine Facette (7) ausgebildet ist, wobei sich die die Abrollfläche bildende Schutzkuppel (11) aus der tafelförmigen Fläche (5) in der von der Teilungsebene wegweisenden Richtung erhebt.

3. Spikestift (1) nach Anspruch 2, **dadurch gekennzeichnet, dass** die tafelförmige Fläche (5) zentral über der Rondistenebene angeordnet ist.

4. Spikestift (1) nach Anspruch 2 oder 3, **dadurch gekennzeichnet, dass** die tafelförmige Fläche (5) parallel zur Rondistenebene angeordnet ist.

5. Spikestift (1) nach einem der Ansprüche 2 bis 4, **dadurch gekennzeichnet, dass** die tafelförmige Fläche (5) kreisförmig, elliptisch, dreieckig, quadratisch, rechteckig, sechseckig, vieleckig oder sternförmig ist.

6. Spikestift (1) nach einem der Ansprüche 1 bis 5, **dadurch gekennzeichnet, dass** die von der Griffkante (4) umschlossene Ebene kreisförmig, elliptisch, dreieckig, quadratisch, rechteckig, sechseckig, vieleckig oder sternförmig ist.

7. Spikestift (1) nach einem der Ansprüche 1 bis 6, **dadurch gekennzeichnet, dass** das Unterteil (3) ausgehend von der von der Griffkante (4) umschlossenen Ebene nach unten spitz zuläuft.

8. Spikestift (1) nach einem der Ansprüche 2 bis 7, **dadurch gekennzeichnet, dass** die Facetten (7) kreisförmig, elliptisch, dreieckig, quadratisch, rechteckig, sechseckig oder vieleckig sind.

9. Spike für einen Fahrzeugreifen, Schuhsohlen oder dergleichen, mit einer Spikespitze, die bei Benutzung des Spikes mit dem Untergrund in Kontakt kommt,
**dadurch gekennzeichnet,**
**dass** der Spike einen Spikestift nach einem der Ansprüche 1 bis 9 enthält.

10. Fahrzeugreifen - insbesondere Fahrzeugluftreifen - mit mindestens einem in der Lauffläche befestigten Spike gemäß Patentanspruch 9.

11. Fahrzeugreifen gemäß den Merkmalen von Anspruch 10,
mit jeweils einer an einem am Fahrzeugrad im Betriebszustand unter Normbedingen des Reifens im unbelasteten Zustand des Reifens um die Reifenachse zylindrischen Hüllkurve mit einem Radius R₁, die einen Spike jeweils lediglich an dessen Schutzkuppel (11) berührt.

12. Fahrzeugreifen gemäß den Merkmalen von Anspruch 10 oder 11,
bei dem jeweils die in den Punkten P der Griffkante (4) senkrecht zum radialen Abstand zur Reifenachse stehende Tangentenebene die Schutzkuppel (11) schneidet.

## Claims

1. Spike stud (1) which can be introduced into a spike body in order to form a spike, comprising a top part (2) and a bottom part (3), the top part (2) forming the tip of the spike once the spike stud (1) has been introduced into the spike body, a grip edge (4) dividing the spike stud (1), in a parting plane, into the top part (2) and bottom part (3), and the top part (2) comprising a table-like surface (5) which has a protective dome (11) which forms a rolling surface and rises up from the table-like surface (5) in the direction oriented away from the table-like surface (5), **characterized in that** the bottom part (3) tapers downwards to a point and is formed in the manner of a cone, of a truncated cone, of a pyramid or of a truncated pyramid, the cross-sectionally narrowing end of the bottom part (3) being oriented away from the plane enclosed by the grip edge (4).

2. Spike stud (1) according to Claim 1, **characterized in that** a girdle (4), which forms the grip edge, divides the spike stud (1), in a parting plane, into the top part (2) and bottom part (3), **in that** the top part (2) comprises a table-like surface (5), which is arranged at a distance above the girdle plane, and **in that** at least one facet (7) is formed between the table-like surface (5) and the girdle (4), wherein the protective dome (11), which is the rolling surface, rises up from the table-like surface (5) in the direction oriented away from the parting plane.

3. Spike stud (1) according to Claim 2, **characterized in that** the table-like surface (5) is arranged centrally above the girdle plane.

4. Spike stud (1) according to Claim 2 or 3, **characterized in that** the table-like surface (5) is arranged parallel to the girdle plane.

5. Spike stud (1) according to one of Claims 2 to 4, **characterized in that** the table-like surface (5) is circular, elliptical, triangular, square, rectangular, hexagonal, polygonal or star-shaped.

6. Spike stud (1) according to one of Claims 1 to 5, **characterized in that** the plane enclosed by the grip edge (4) is circular, elliptical, triangular, square, rectangular, hexagonal, polygonal or star-shaped.

7. Spike stud (1) according to one of Claims 1 to 6, **characterized in that** the bottom part (3) tapers downwards to a point starting from the plane enclosed by the grip edge (4).

8. Spike stud (1) according to one of Claims 2 to 7, **characterized in that** the facets (7) are circular, elliptical, triangular, square, rectangular, hexagonal or polygonal.

9. Spike for a vehicle tire, footwear soles or the like, having a spike tip which, when the spike is in use, comes into contact with the underlying surface, **characterized in that** the spike contains a spike stud according to one of Claims 1 to 8.

10. Vehicle tire having at least one spike according to Patent Claim 9 fastened in the tread.

11. Vehicle tire according to the features of Claim 10, with a respective cylindrical envelope, of radius R₁, around the tire axis in the operating state, under standard conditions of the tire and with the tire in the non-loaded state, the envelope coming into contact with a respective spike merely at the protective dome (11) thereof.

12. Vehicle tire according to the features of Claim 10 or 11, in the case of which in each case the tangent plane which is located, at the points P of the grip edge (4), perpendicularly to the radial distance from the tire axis, intersects the protective dome (11).

## Revendications

1. Tige de crampon (1) qui peut être insérée dans un corps de crampon pour former un crampon, constituée d'une partie supérieure (2) et d'une partie inférieure (3), la partie supérieure (2) formant la pointe du crampon lorsque la tige de crampon (1) a été insérée dans le corps de crampon, une arête périphérique (4) divisant la tige de crampon (1) en une partie supérieure (2) et une partie inférieure (3) dans un plan de division, la partie supérieure (2) comprenant une surface (5) en forme de table qui présente une coupole de protection (11) qui forme une surface de déroulement et qui déborde de la surface (5) en forme de table dans la direction qui s'éloigne de la surface (5) en forme de table,
**caractérisée en ce que**
la partie inférieure (3) converge en pointe vers le bas partant et est configurée en cône, en tronc de cône, en pyramide ou en tronc de pyramide, l'extrémité de section transversale rétrécie de la partie inférieure (3) n'étant pas tournée vers le plan entouré par l'arête périphérique (4).

2. Tige de crampon (1) selon la revendication 1, **caractérisée en ce que** la couronne (4) qui forme l'arête périphérique divise la tige de crampon (1) en une partie supérieure (2) et une partie inférieure (3) dans un plan de division, **en ce que** partie supérieure (2) comprend une surface (5) en forme de table disposée à distance au-dessus du plan de la couronne et **en ce qu'**au moins une facette (7) est formée entre la surface (5) en forme de table et le flanc (4), la coupole de protection (11) qui forme la surface de déroulement débordant de la surface (5) en forme de table dans la direction qui s'éloigne du plan de division.

3. Tige de crampon (1) selon la revendication 2, **caractérisée en ce que** la surface (5) en forme de table est disposée centralement au-dessus du plan de la couronne.

4. Tige de crampon (1) selon les revendications 2 ou 3, **caractérisée en ce que** la surface (5) en forme de table est parallèle au plan de la couronne.

5. Tige de crampon (1) selon les revendications 2 à 4, **caractérisée en ce que** la surface (5) en forme de table a une forme circulaire, elliptique, triangulaire, carrée, rectangulaire, hexagonale, polygonale ou en étoile.

6. Tige de crampon (1) selon l'une des revendications 1 à 5, **caractérisée en ce que** le plan entouré par l'arête périphérique (4) est circulaire, elliptique, triangulaire, carré, rectangulaire, hexagonal, polygonal ou en étoile.

7. Tige de crampon (1) selon l'une des revendications 1 à 6, **caractérisée en ce que** partant du plan entouré par l'arête périphérique (4), la partie inférieure (3) converge en pointe vers le bas.

8. Tige de crampon (1) selon l'une des revendications 2 à 7, **caractérisée en ce que** les facettes (7) sont circulaires, elliptiques, triangulaires, carrées, rectangulaires, hexagonales ou polygonales.

9. Crampon pour bandage de roue de véhicule, semelle de chaussure ou similaires, doté d'une pointe de crampon qui entre en contact avec le sol en utilisation, **caractérisé en ce que** le crampon contient une pointe de crampon selon l'une des revendications 1 à 8.

10. Bandage de roue de véhicule, en particulier bandage pneumatique de roue de véhicule, présentant au moins un crampon selon la revendication 9 fixé dans la surface de roulement.

11. Bandage de roue de véhicule selon les caractéristiques de la revendication 10, présentant une courbe d'enveloppe cylindrique autour de l'axe du bandage de roue, la courbe d'enveloppe présentant un rayon R₁ et ne touchant un crampon que sur sa coupole de protection (11) lorsque le bandage de roue est fixé sur la roue d'un véhicule sans être mis en charge dans des conditions normales de fonctionnement du bandage de roue.

12. Bandage de roue de véhicule selon les caractéristiques des revendications 10 ou 11, dans lequel le plan tangent situé aux points P de l'arête périphérique (4), perpendiculairement à la distance radiale par rapport à l'axe du bandage de roue, coupe la coupole de protection (11).
